(19)

**Europäisches Patentamt**

**European Patent Office**

**Office européen des brevets**

(11) **EP 4 722 402 A1**

(12) **EUROPEAN PATENT APPLICATION**

(43) Date of publication:
08.04.2026 Bulletin 2026/15

(21) Application number: 24204759.5

(22) Date of filing: 04.10.2024

(51) International Patent Classification (IPC):
*C22C 29/06* (2006.01)    *C22C 29/08* (2006.01)
*C23C 26/00* (2006.01)

(52) Cooperative Patent Classification (CPC):
(C-Sets available)
**C22C 29/08; B23B 1/00; B32B 1/00; C22C 29/067;
C23C 30/005;** B22F 2005/001          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **AB Sandvik Coromant**
**811 81 Sandviken (SE)**

(72) Inventors:
• **GARCIA, José Luis**
**811 81 SANDVIKEN (SE)**
• **Boing, Denis**
**811 81 SANDVIKEN (SE)**
• **Chychko, Andrei**
**811 81 SANDVIKEN (SE)**

(74) Representative: **Sandvik**
**Sandvik Intellectual Property AB**
**811 81 Sandviken (SE)**

(54) **CUTTING TOOL FOR MACHINING IN ALUMINIUM**

(57)     The present invention relates to the use of a cutting tool for machining in aluminum wherein the cutting tool comprises a cemented carbide substrate comprising WC and between 3 and 20 wt% Fe-based metal binder wherein the metal binder comprises at least 50 wt% but less than 95 wt% Fe.

**EP 4 722 402 A1**

(52) Cooperative Patent Classification (CPC): (Cont.)

C-Sets
B22F 2998/10, C22C 1/051, B22F 9/04, B22F 3/02,
B22F 3/15, C23C 26/00

# EP 4 722 402 A1

**Description**

The present invention relates the use of a cemented carbide cutting tool with a Fe-based binder for machining in aluminium and its alloys.

Background

Cemented carbide cutting tools based on WC and a Co binder have been used for metal cutting for more than a hundred years. When machining aluminum however, cemented carbide has been less suitable due to the high diffusion of aluminum into the Co binder which leads to deterioration of the surface finish of the aluminum surface. Instead, far more expensive materials such as PCD (polycrystalline diamond) have been used as cutting tools.

Cemented carbides with iron based binders are usually less desired in cutting tools since it is prone to corrosion and that the hardness of the cemented carbide decreases at higher temperatures during machining.

It is an object of the present invention to find a cemented carbide that can be used for machining aluminum and its alloys with a prolonged tool life compared to a cemented carbide with a Co binder when it comes to surface finish of the aluminum.

Detailed description of the invention

The present invention relates to the use of a cutting tool for machining aluminum wherein the cutting tool comprises a cemented carbide substrate comprising WC and between 3 and 20 wt% Fe-based metal binder wherein the metal binder comprises at least 50 wt% but less than 95 wt% Fe.

By cemented carbide is herein meant that the cemented carbide comprises at least 50 wt% WC.

By Fe-based binder is herein meant that the binder contains at least 50 wt% Fe. The amount of binder phase is herein given by the total amount of possible binder elements if present, where the possible binder elements are selected from Ni, Co, Cr, Mn, Al and Cu. It is however well known in the art of cemented carbide manufacturing that other elements, e.g. W and C from the WC etc. will be present in the metal binder since they are inevitably dissolved in the metal binder during sintering. If other common additives, such as cubic carbides etc. are added, elements such as Ti, Nb, Ta, V etc. can also be found in the metal binder. The amounts of possible binder elements are either given by the amount of raw material used or measured using conventional chemical analysis of the cemented carbide.

The metal binder is present in an amount of between 3 and 20 wt% of the sintered cemented carbide, preferably between 5 and 15 wt% of the sintered cemented carbide. The metal binder comprises at least 50 wt% Fe, preferably at least 60 wt% Fe, more preferably at least 70wt% Fe but no more than 95wt%, preferably no more than 90 wt%. If the amount of Fe is lower than 50 wt% then binder will become more reactive towards Al as Fe is less reactive than other more conventional binder metals like Ni and Co.

In one embodiment of the present invention the binder further comprises Ni. Preferably in an amount so that the Ni/(Ni+Fe) weight ratio in the cemented carbide is between 0.05 and 0.30, more preferably between 0.08 and 0.20.

In one embodiment of the present invention Cr is added to the cemented carbide. Cr is a common addition in cemented carbides but the amount of Cr that can be added is usually limited by the solubility of Cr in the metal binder. If the amount of Cr exceeds the solubility in the binder, a brittle carbide, $Cr_7C_3$, is precipitated in the microstructure and the mechanical properties of the cemented carbide will deteriorate which can influence the overall performance of the cutting tool.

Cr can be added up to the limit where $Cr_7C_3$ is formed, however, for practical reasons it is not suitable to be too close to that limit. Preferably, the weight fraction Cr/(Cr+Ni+Fe) is between 0.01 and 0.12, preferably between 0.01 and 0.10, more preferably between 0.02 and 0.08.

In one embodiment of the present invention Al is added to the cemented carbide. Al is added so that the Al/(Al+Cr+Ni+Fe) weight ratio in the cemented carbide is between 0.01 and 0.08, preferably between 0.015 and 0.04. Al in the binder can be beneficial to reduce the reactivity of the binder with aluminum but also to increase its hardness due to intermetallic precipitations.

According to one embodiment of the present invention, the cemented carbide is essentially free from Co. By that is herein meant that no Co raw material powder is added. Co can however be present in smaller amounts due to contamination if the same manufacturing equipment is used as for Co containing cemented carbides and/or if the milling ball media is made of Co containing cemented carbide. By essentially free from Co is herein meant that the cemented carbide comprises less than 1 wt% Co, preferably less than 0.5wt %. The Co content is measured according to standard practice when doing chemical analysis on cemented carbides.

The cemented carbide according to the present invention can have any average WC grain size known for cutting tools. Preferably the average WC grain size is between 0.1 and 12 $\mu$m, more preferably between 0.4 and 9 $\mu$m, more preferably between 0.5 and 3 $\mu$m as measured by the linear intercept method. The average WC grain size that is aimed for is however chosen depending on the specific cutting application.

In one embodiment of the present invention the cemented carbide comprises eta phase. By eta phase is herein meant carbides selected from $Me_{12}C$ and $Me_6C$ where Me is one or more metals selected from W and the binder phase metal or metals. Eta phase is formed when the total carbon content in the cemented carbide is below a certain point. To have a positive impact on the material properties the eta phase is present as fine dispersed eta phase grains. This can easily be seen by a person skilled in the art when looking at images of the microstructure. More specifically, fine dispersed eta grains can also be defined as the cemented carbide microstructure does not contain more than 8 clusters or eta phase grains larger than 15 $\mu$m in an area of 1 $mm^2$ in a light optical microscope image at 200 times magnification. Eta phase grains can exist as very large, brittle and unwanted form with grain sizes typically above 50 $\mu$m or even larger than 100 $\mu$m and these are not part of the present invention. The amount of eta phase if present, is between 1 and 10 vol%, preferably between 1 and 5 vol%. The volume fraction of eta phase is assumed to be the same as the area fraction which can for example be determined by image analysis using the software Image J using the "Analyze particles" function with "include holes" and the "0-Infinity" filter settings. Prior to the measurements, color LOM images were converted into 8-bit black and white images using Automatic threshold setup. The images used for the analysis was LOM images with a magnification of 1000X, between 10 and 12 images were processed. The average grain size of the eta phase grains (minimum feret diameter) is suitably between 0.1 and 10 $\mu$m, preferably between 0.5 and 5 $\mu$m. This can e.g. be measured by image analysis on a LOM image, using Image J according to the method for measuring the volume fraction eta phase as described in the examples with the addition that the Feret size option "exclude on edges" was additionally activated in the "Analyze particles" function. The average grain size for eta is given as the minimum Feret grain size.

The fine dispersed eta phase grains of the present invention are formed during the sintering process and carbon deficiency and equilibrium temperature needs to be controlled in the process to reach the claimed eta phase appearance and content. The difference in substoichiometric carbon content between achieving the unwanted large agglomerates of eta phase, and achieving the finely distributed eta phase, that it is aimed for, can be very small. Being close to that limit requires monitoring the microstructure to make sure that the unwanted large agglomerates are avoided. Carefully adjusting carbon contents and then monitor its result in terms of the obtained microstructure is a known working procedure to a person skilled in the art.

In one embodiment of the present invention the cemented carbide comprises other elements, preferably grain growth inhibitors. For example, the cemented carbide can comprise one or more of Cr, Ti, Nb, Ta and V.

The present invention relates to the use of a specific cutting tool for machining in Aluminum. Cutting tool materials are usually designed to work in specific work piece materials, for certain cutting operations e.g. turning, milling, drilling etc. Machining aluminum is not like the many of the other applications. When machining other materials like e.g. steel, cast iron etc. the tool life is usually determined by tool failure, e.g. breakage, plastic deformation of the cutting edge etc. For machining in aluminum, the cutting tool doesn't usually fail. Instead, the tool is replaced when the surface finish of the work piece starts to deteriorate.

By aluminum is herein meant aluminum and its alloys. Wrought and casting aluminum alloys including its families related to the chemical composition: Pure Al, Al-Cu-Mg, Al-Cu-Mg-Si, Al-Mn-Mg, Al-Si, Al-Mg, Al-Mg-Mn, Al-Mg-Si, Al-Zn-Mg, Al-Zn-Mg-Cu, Al-Li-Cu-Mg.

Some examples of products to be machined are aluminum foils, window frames, automotive structures and components.

In one embodiment of the present invention, the cutting tool is uncoated.

In one embodiment of the present invention the cutting tool is provided with a coating. Preferably the coating is a diamond like coating a so called DLC coating with a thickness of between 0.5 and 3 $\mu$m.

By cutting tool is herein meant an insert, drill or endmill.

In one embodiment of the present invention the binder comprises Ni and Fe so that the Ni/(Ni+Fe) weight ratio in the cemented carbide is between 0.08 and 0.20, preferably between 0.12 and 0.18.

In one embodiment of the present invention the binder comprises Fe, Ni and Cr so that the Ni/(Ni+Fe) weight ratio in the cemented carbide is between 0.08 and 0.20, preferably between 0.12 and 0.18 and the Cr/(Cr+Ni+Fe) weight ratio in the cemented carbide is between 0.01 and 0.08, preferably between 0.02 and 0.06.

In one embodiment of the present invention the binder comprises Fe, Ni, Cr and Al so that the Ni/(Ni+Fe) weight ratio in the cemented carbide is between 0.08 and 0.20, preferably between 0.12 and 0.18 and the Cr/(Cr+Ni+Fe) weight ratio in the cemented carbide is between 0.01 and 0.08, preferably between 0.02 and 0.06 or between 0.05 and 0.075. The Al/(Al+Cr+Ni+Fe) weight ratio in the cemented carbide is between 0.01 and 0.08, preferably 0.02 and 0.06.

Drawings

Figure 1 shows an example of EDX area mapping layout to detect Al increase in each studied sample.

Figure 2 shows one of the cemented carbide substrates after the performance test where A is the cutting edge, B is the crater width, C is the area where the EDX measurements are performed, and D is the aluminum build-up area.

Example 1

A Cemented carbide substrate was made by mixing powders according to Table 1. The WC powder had an average particle size (FSSS) of 0.8 $\mu$m. Fe and Ni was added as individual element powders. $W_2C$ or carbon black was added to some powder blends to adjust the carbon balance. The powder blend of 215 gram was milled for 17h in a 0.25L mill together with a milling liquid (ethanol/water) and 2 wt% (polyethylene glycol), after which the slurry was dried under constant evacuation in nitrogen atmosphere at 80°C. The dried powder blend was then pressed into green bodies which was sintered in a HIP furnace (HEK45) at 1410°C for 45 minutes followed by 15 min high pressure step at 50 bar and then cooling down at speed around 5 °C/min.

Table 1

| Sample | Fe (wt%) | Ni (wt%) | $Cr_3C_2$ (wt%) | Carbon black | $W_2C$ | WC |
|---|---|---|---|---|---|---|
| Invention 1 | 8.4 | 1.6 | 0.46 | 0.30 | - | balance |

The sintered piece had the following composition. The presence/absence of eta phase were determined by looking at a SEM image.

Table 2

| Sample | Ni(Ni+Fe) | Cr/(Ni+Fe+Cr) | Eta phase |
|---|---|---|---|
| Invention 1 | 0.16 | 0.038 | No |

Example 2

For comparison, substrates having binders being Co or Ni based were produced in the same way as in Example 1 with the compositions shown in Table 3.

Table 3

| Sample | Ni (wt%) | Co (wt%) | Fe (wt%) | Cr (wt%) | Al (wt%) | $ZrO_2$ (wt%) | Eta phase |
|---|---|---|---|---|---|---|---|
| Comparative 1 | 11 | - | - | 1.8 | - | | Yes |
| Comparative 2 | 11 | - | - | 1.8 | 0.3 | | Yes |
| Comparative 3 | 8 | - | - | 0.88 | - | 1 | No |
| Comparative 4 | - | 10 | - | 0.39 | - | - | No |

Performance test

The different samples from examples 1 and 2 were tested in a continuous turning application in Aluminum (alloy AlCu4SiMg) at the following cutting parameters:

$$v_c = 1000 \text{ m/min};$$

$$f = 0.4 \text{ mm/rev};$$

$$a_p = 2 \text{ mm}$$

cutting fluid
The tools were kept in contact with the workpiece material for 10 min.
Two uncoated substrates of each sample were tested.

Evaluation

After testing, the cemented carbide samples were analyzed using SEM-EDX. During the turning test, a crater is formed and the cemented carbide samples were cut to form a cross section of the crater.

The analyzed area was at the bottom of the crater approx. 0.2 mm from the edge.

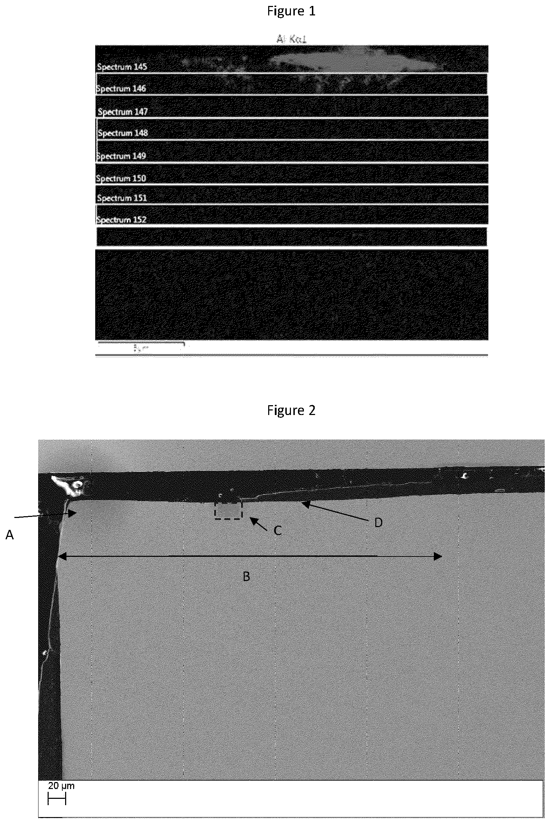

In Figure 2, a SEM image of a cross section is shown.

Within each analyzed area, a series of strips were marked parallel to the sample surface with each strip having a width of 1.25 $\mu$m using EDX mapping mode in INCA software provided from Oxford Instruments. The first strip was placed adjacent to the crater bottom/ aluminum build-up area but avoiding overlapping with the build-up area. An example of the analyzed strips layout for the sample Comparative 1 can be seen in Figure 1.

EDX analysis detected Al concentration increase only within the 1st strip (1.25 $\mu$m distance from the bottom of the crater) for all the studied samples.

The average Al content in wt% within the 1st strip of 1.25 $\mu$m from the crater bottom is shown in Table 4.

The results can be seen in Table 4, where the number given is the average of two tests.

Table 4

| Sample | Al (wt%) |
|---|---|
| Invention 1 | 0.7 |
| Comparative 1 | 1.45 |
| Comparative 2 | 2 |
| Comparative 3 | 1.45 |
| Comparative 4 | 1.4 |

It can be seen from the results in Table 4 that the cemented carbide pieces according to the invention contains considerably less Al than the comparative pieces.

**Claims**

1. Use of a cutting tool for machining in aluminum wherein the cutting tool comprises a cemented carbide substrate comprising WC and between 3 and 20 wt% Fe-based metal binder wherein the metal binder comprises at least 50 wt% but less than 95 wt% Fe.

2. Use of a cutting tool according to claim 1 wherein the metal binder comprises at least 60 wt% Fe.

3. Use of a cutting tool according to any of the preceding claims wherein the binder further comprises Ni in such amount so that Ni/(Ni+Fe) weight ratio in the cemented carbide is between 0.05 and 0.30.

4. Use of a cutting tool according to claim 3 wherein the binder further comprises Cr in such amount so that the Cr/(Ni+Fe+Cr) weight ratio in the cemented carbide is between 0.01 and 0.12.

5. Use of a cutting tool according to claim 4 wherein the binder further comprises Al in such amount so that the Al/(Ni+Fe+Cr+Al) weight ratio in the cemented carbide is between 0.01 and 0.08.

6. Use of a cutting tool according to any of the preceding claims wherein the cemented carbide is essentially free from Co.

7. Use of a cutting tool according to any of the preceding claims wherein the cemented carbide comprises eta phase in an amount of 1 to 10 vol%.

8. Use of a cutting tool according to any of the preceding claims wherein the cutting tool is uncoated.

9. Use of a cutting tool according to any of the preceding claims wherein the cutting tool is provided with a DLC coating with a thickness of between 0.5 and 3 $\mu$m.

Figure 1

Figure 2

Europäisches
Patentamt
European
Patent Office
Office européen
des brevets

# EUROPEAN SEARCH REPORT

**Application Number**

**EP 24 20 4759**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 438 753 A1 (SANDVIK COROMANT AB [SE]) 2 October 2024 (2024-10-02) | 1-7 | INV. C22C29/06 |
| Y | * paragraphs [0001], [0007] - [0011], [0014], [0015], [0025] - [0028]; claims; figures 2-3; examples * | 8,9 | C22C29/08 C23C26/00 |
|  | ----- | | |
| Y | US 2007/254187 A1 (YAMAMOTO KENJI [JP] ET AL) 1 November 2007 (2007-11-01) * paragraphs [0001], [0004], [0006] - [0009], [0022] - [0023], [0039], [0043] * | 8,9 | |
|  | ----- | | |
| A | EP 3 747 564 A1 (HITACHI METALS LTD [JP]) 9 December 2020 (2020-12-09) * the whole document * | 1-9 | |
|  | ----- | | |

**TECHNICAL FIELDS SEARCHED (IPC)**

C22C
C23C
B22F

The present search report has been drawn up for all claims

| Place of search | Date of completion of the search | Examiner |
|---|---|---|
| The Hague | 12 March 2025 | Ceulemans, Judy |

EPO FORM 1503 03.82 (P04C01)

## ANNEX TO THE EUROPEAN SEARCH REPORT
## ON EUROPEAN PATENT APPLICATION NO.

EP 24 20 4759

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2025

| Patent document cited in search report | | Publication date | Patent family member(s) | | Publication date |
|---|---|---|---|---|---|
| EP 4438753 | A1 | 02-10-2024 | EP | 4438753 A1 | 02-10-2024 |
| | | | WO | 2024200457 A1 | 03-10-2024 |
| US 2007254187 | A1 | 01-11-2007 | CN | 101062602 A | 31-10-2007 |
| | | | DE | 102007010595 A1 | 08-11-2007 |
| | | | FR | 2900417 A1 | 02-11-2007 |
| | | | JP | 4704950 B2 | 22-06-2011 |
| | | | JP | 2007291484 A | 08-11-2007 |
| | | | KR | 20070105895 A | 31-10-2007 |
| | | | KR | 20090029239 A | 20-03-2009 |
| | | | US | 2007254187 A1 | 01-11-2007 |
| EP 3747564 | A1 | 09-12-2020 | CN | 111386158 A | 07-07-2020 |
| | | | EP | 3747564 A1 | 09-12-2020 |
| | | | JP | 7215431 B2 | 31-01-2023 |
| | | | JP | WO2019151402 A1 | 28-01-2021 |
| | | | KR | 20200115458 A | 07-10-2020 |
| | | | TW | 201936940 A | 16-09-2019 |
| | | | US | 2021370371 A1 | 02-12-2021 |
| | | | WO | 2019151402 A1 | 08-08-2019 |

For more details about this annex : see Official Journal of the European Patent Office, No. 12/82